# FASCICULE DE BREVET EUROPEEN

(11) **EP 3 385 145 B1**
(45) Date de publication et mention de la délivrance du brevet: **06.04.2022**
(21) Numéro de dépôt: 18157287.6
(22) Date de dépôt: 16.02.2018
(51) Int. Cl.: B62B 5/00, B62B 3/00

(54) **MODULE LOGISTIQUE**
LOGISTIKMODUL
LOGISTIC MODULE

(30) Priorité: 17.02.2017 CN 201710086906
(43) Date de publication de la demande: 10.10.2018
(73) Titulaire: YTHALES INVEST, 37520 La Riche (FR)
(72) Inventeur: CHERBONNIER, Yves, 37000 TOURS (FR)
(74) Mandataire: den Braber, Gérard Paul

(56) Documents cités:
- EP-A1- 2 815 949
- EP-A2- 2 712 786
- BE-A6- 1 012 707
- DE-A1- 2 021 914
- FR-A1- 3 009 534
- GB-A- 2 529 710
- JP-A- H1 148 981

## Description

### DOMAINE TECHNIQUE

Un aspect de l'invention concerne un module logistique pour stocker, au moins temporairement, des objets, notamment des marchandises. Le module logistique peut également servir pour transporter des objets, tels que des marchandises. Le module logistique peut être, par exemple, sous forme d'un chariot. D'autres aspects de l'invention concernent un ensemble comprenant un module logistique, et un procédé de préparation de commande impliquant un module logistique.

### ETAT DE LA TECHNIQUE ANTERIEURE

La publication brevet EP 1 428 763 A1 décrit un chariot de stockage de marchandises comprenant une embase et deux ridelles verticales montées sur celle-ci. Le chariot est muni d'un volet antichute pour recouvrir un côté du chariot défini entre ces deux ridelles. Le volet antichute est fixé sur les deux ridelles de façon que le volet antichute soit ouvrable, ou amovible. Un opérateur peut ainsi ouvrir, ou temporairement retirer, le volet antichute pour placer des marchandises dans le chariot, ou pour enlever des marchandises du chariot.

Un chariot tel que décrit dans la publication brevet EP 1 428 763 A1 peut être utilisé dans un centre logistique d'une chaîne de magasins pour préparer une commande d'approvisionnement d'un magasin. Un opérateur du centre logistique va alors remplir le chariot avec des marchandises spécifiées dans cette commande. Une fois rempli, le chariot est expédié au magasin pour l'approvisionner conforme à sa commande.

Cette préparation de commande entraine de nombreux déplacements, car différentes marchandises spécifiées dans la commande se trouvent typiquement à différents endroits dans le centre logistique, qui peuvent être éloignés les uns des autres. Un volet antichute évite qu'une marchandise déjà chargée puisse tomber du chariot lors d'un déplacement. Ceci est d'autant plus important du fait qu'un déplacement comprend typiquement une prise de virages, des freinages, et des accélérations.

Le document brevet GB2529710A décrit un dispositif de fermeture pour ouvrir et fermer une ouverture de réception de marchandises prévue entre deux grilles latérales d'un chariot de type roll. Le dispositif comprend un volet antichute retenu au niveau d'une des deux grilles latérales lorsqu'il est rangé. Le volet antichute s'étend au moins partiellement entre les deux grilles lorsqu'il est déployé, afin de fermer l'ouverture de réception des marchandises. Un système de rails guide le volet antichute pendant un mouvement de va-et-vient.

### EXPOSE DE L'INVENTION

Il existe un besoin pour une solution permettant une efficacité logistique plus importante.

A cet égard, les points suivants ont été pris en considération. Une préparation de commande telle que décrite dans ce qui précède nécessite de nombreuses opérations d'ouverture et de fermeture d'un volet antichute afin de protéger des marchandises contre une chute lors des déplacements. Au fait, à chaque endroit où se trouvent une ou plusieurs marchandises spécifiées dans la commande, l'opérateur doit effectuer une opération d'ouverture puis une opération de fermeture. L'opérateur doit ouvrir un volet antichute afin de pouvoir charger une marchandise. Puis l'opérateur doit refermer le volet antichute afin de protéger les marchandises chargées lors du déplacement qui va suivre. Cela entrave l'efficacité d'un processus de préparation de commandes. Il y a également un risque que l'opérateur omet de fermer le volet antichute, involontairement ou volontairement pour éviter les opérations contraignantes d'ouverture et de fermeture. Une marchandise pourrait donc tomber du chariot et ainsi être perdue ou endommagée.

Selon un aspect de l'invention, un module logistique est tel que défini à la revendication 1.

Un tel module logistique permet qu'en début de préparation de commande, le volet antichute inférieur soit fermé, tandis que le volet antichute supérieur soit ouvert. Le volet antichute inférieur protège à lui seul les marchandises qui sont chargées en début de préparation de commande, tant que ces marchandises ne dépassent pas la partie inférieure couverte par le volet antichute inférieur. La partie supérieure de la face dépourvue de ridelle reste ouverte et donc accessible à l'opérateur qui effectue la préparation de commande. Ainsi, l'opérateur n'a pas besoin d'ouvrir le volet antichute inférieur pour placer une marchandise dans le module logistique. Le volet antichute inférieur peut rester fermé durant toute la préparation de commande, et le volet antichute supérieur peut rester ouvert au moins en début de préparation de commande. Ainsi, il y a moins d'opérations d'ouverture et de fermeture de volet antichute à effectuer lors d'une préparation de commande. L'efficacité logistique est augmentée.

De plus, dans la pratique, il y a moins de risque de chute de marchandises lors d'une préparation de commande avec un module logistique conforme à l'invention, par rapport à une préparation de commande avec un module logistique comprenant un volet antichute conventionnel où l'opérateur sera tenté de laisser ce dernier volet antichute ouvert pour éviter les opérations contraignantes d'ouverture et de fermeture.

En outre, un chevauchement de volets antichute contribue à bien protéger des marchandises chargées dans un chariot, ou plus généralement, dans un module logistique.

Selon un autre aspect de l'invention, un procédé de préparation de commande est tel que défini à la revendication 7.

À titre illustratif, une description détaillée de quelques modes de réalisation de l'invention est présentée dans ce qui suit en référence à des dessins annexes.

### DESCRIPTION SOMMAIRE DES DESSINS

- La figure 1 est un diagramme schématique illustrant un module logistique, vu en perspective, muni d'une juxtaposition de volets antichute.
- La figure 2 est un diagramme schématique illustrant le module logistique, vu de face.
- La figure 3 est un diagramme schématique illustrant le module logistique, vu en perspective, dans un état partiellement fermé.
- La figure 4 est un diagramme schématique illustrant le module logistique, vu en perspective, dans un état ouvert.
- La figure 5 est un diagramme schématique illustrant un jeu de volets antichute, vu de dessus, apte à être montés en juxtaposition sur un module logistique.

### DESCRIPTION DE QUELQUES MODES DE REALISATION

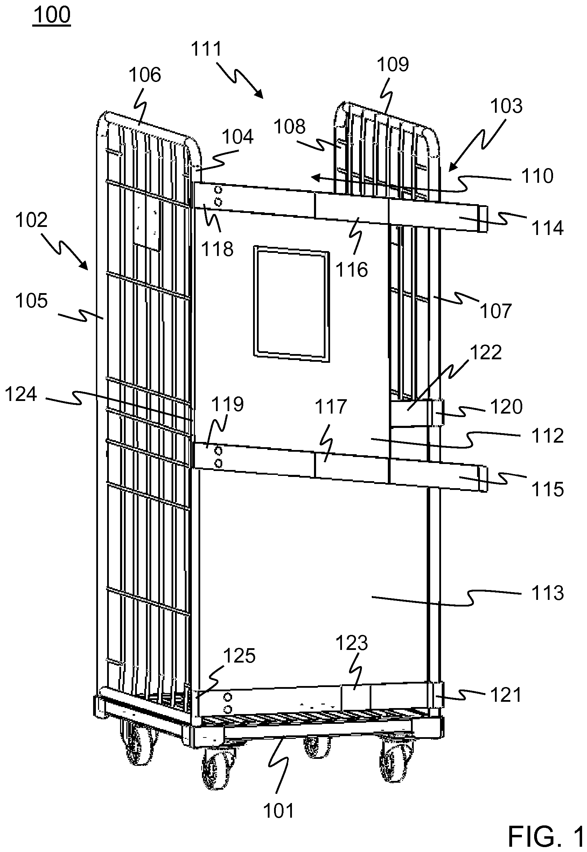

La figure 1 illustre schématiquement, par une vue en perspective, un module logistique 100 en la forme d'un chariot. Ce module logistique sera alors appelé chariot 100 dans ce qui suit à titre illustratif. Le chariot 100 comprend une embase 101 sous laquelle quatre roulettes sont fixées. Deux ridelles 102, 103 sont montées verticalement sur l'embase 101 : une ridelle 102 montée près d'un bord de l'embase 101 se situant à gauche à la figure 1, et l'autre ridelle 103 près d'un bord de l'embase 101 se situant à droite. Ces ridelles seront alors respectivement désignées ridelle gauche 102 et ridelle droite 103 par la suite. Au fait, la ridelle gauche 102 constitue une face gauche du chariot 100, et la ridelle droite 103 constitue une face droite. A titre d'exemple, les deux ridelles 102, 103 peuvent avoir une hauteur comprise entre, par exemple, 1500 et 2000 millimètres (mm).

La ridelle gauche 102 peut être sous forme d'une grille métallique comportant des montants verticaux et des traverses horizontales, assemblés par soudure. Il en va de même pour la ridelle droite 103. La ridelle gauche 102 illustrée à la figure 1 comprend un cadre périphérique tubulaire ayant deux sections verticales 104, 105 s'étendant de l'embase 101 vers le haut, et une section horizontale 106 constituant un bord supérieur de la ridelle gauche 102. Les deux sections verticales 104, 105 du cadre périphérique constituent en fait deux montants de bord désignés respectivement montant de bord avant 104 et montant de bord arrière 105 dans ce qui suit. Le précédent s'applique également à la ridelle droite 103 qui comprend aussi un cadre périphérique tubulaire ayant un montant de bord avant 107, un montant de bord arrière 108, et un bord supérieur horizontal 109.

Le chariot 100 comprend deux faces 110, 111 qui sont dépourvues de ridelle : une face 110 représentée à la figure 1 comme l'avant du chariot 100, l'autre face 111 représentée comme l'arrière du chariot 100. Ces faces seront respectivement désignées façade 110 et fond 111 dans ce qui suit.

Le chariot 100 comprend une juxtaposition de deux volets antichute individuels : un volet antichute supérieur 112 et un volet antichute inférieur 113. Le volet antichute supérieur 112 peut recouvrir individuellement une partie supérieure de la façade 110, dépourvue de ridelle. Le volet antichute inférieur 113 peut recouvrir individuellement une partie inférieure de cette façade 110. Les deux volets antichute 112, 113 peuvent avoir une largeur comprise entre, par exemple, 600 et 700 millimètres (mm), et une hauteur comprise entre, par exemple, 750 et 1000 millimètres (mm), environ la moitié de la hauteur des deux ridelles 102, 103. Dans le mode de réalisation illustré à la figure 1, le volet antichute supérieur 112 est muni d'une pochette transparente dans laquelle une étiquette peut être insérée.

La figure 1 représente le volet antichute inférieur 113 dans un état de fermeture où ce volet recouvre la partie inférieure de la façade 110. Autrement dit, le volet antichute inférieur 113 est fermé. Le volet antichute supérieur 112 est représenté dans un état intermédiaire lors d'une action de fermeture pour recouvrir la partie supérieure de la façade 110, ou lors d'une action d'ouverture pour découvrir cette partie supérieure. Autrement dit, le volet antichute supérieur 112 est mi-ouvert.

Plus en détails, le volet antichute supérieur 112 comprend deux rubans auto-agrippant 114, 115 : un ruban auto-agrippant supérieur 114 et un ruban auto-agrippant inférieur 115. Ces rubans auto-agrippant 114, 115 permettent de fixer de façon amovible un bord droit du volet antichute supérieur 112 à la ridelle droite 103, notamment au montant de bord avant 107 de cette ridelle. Le ruban auto-agrippant supérieur 114 fait partie d'une bande supérieure 116 du volet antichute supérieur 112. Le ruban auto-agrippant inférieur 115 fait partie d'une bande inférieure 117 de ce même volet antichute 112. Ces bandes 116, 117 s'apparentent à des sangles.

Le volet antichute supérieur 112 comprend en outre deux rubans retournés sur eux-mêmes en boucle 118, 119, et cela de façon fixe, autour du montant de bord avant 104 de la ridelle gauche 102. Ces rubans 118, 119 fixent alors de façon verrouillée un bord gauche du volet antichute supérieur 112 à la ridelle gauche 102, plus précisément au montant de bord avant 104 de cette ridelle 102. Les deux rubans 118, 119 peuvent être maintenus en boucle par, par exemple, des rivets comme l'illustre la figure 1 à titre d'exemple. L'un de ces deux rubans 118 fait partie de la bande supérieure 116 du volet antichute supérieur 112, l'autre ruban 119 fait partie de la bande inférieure 117 de ce même volet antichute.

Les remarques sur le volet antichute supérieur 112, dans les deux paragraphes précédents, s'appliquent également au volet antichute inférieur 113. Ce volet antichute 113 comprend aussi deux rubans auto-agrippant 120, 121 : un ruban auto-agrippant supérieur 120 faisant partie d'une bande supérieure 122 du volet antichute inférieur 113, et un ruban auto-agrippant inférieur 121 faisant partie d'une bande inférieure 123 de ce même volet antichute 113. A la figure 1, ces deux rubans auto grippant 120, 121 sont retournés sur eux-mêmes afin de fixer de façon amovible un bord droit du volet antichute inférieur 113 à la ridelle droite 103, plus précisément, au montant de bord avant 107 de cette ridelle 103. Le volet antichute inférieur 113 comprend aussi deux rubans retournés sur eux-mêmes en boucle 124, 125, et cela de façon fixe, autour du montant de bord avant 104 de la ridelle gauche 102.

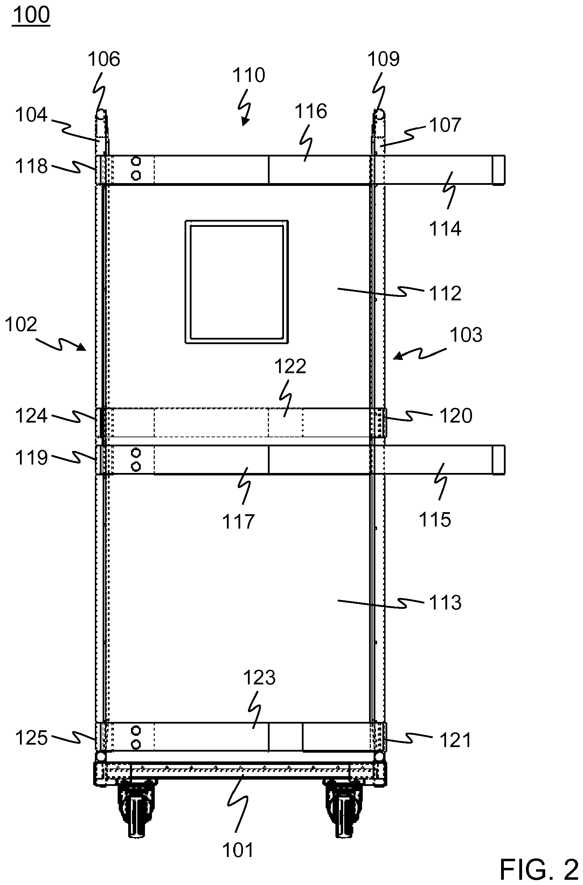

La figure 2 illustre schématiquement, par une vue de face, le chariot 100 déjà illustré à la figure 1. La figure 2 représente le volet antichute inférieur 113 dans l'état de fermeture où ce volet 113 recouvre la partie inférieure de la façade 110, comme l'illustre également la figure 1. Le volet antichute supérieur 112 est représenté dans un état de quasi-fermeture. Dans cet état, le bord droit du volet antichute supérieur 112 est accolé, ou presque, au montant de bord avant 107 de la ridelle droite 103. Il suffit de retourner les deux rubans auto-agrippant 114, 115 sur eux-mêmes afin de fixer de façon amovible le bord droit du volet antichute supérieur 112 à la ridelle droite 103, plus précisément, au montant de bord avant 107 de cette ridelle 103.

La figure 2 montre clairement que le volet antichute supérieur 112 et le volet antichute inférieur 113 se chevauchent partiellement. Une partie basse du volet antichute supérieur 112 couvre une partie haute du volet antichute inférieur 113. Au fait, la bande inférieure 117 du volet antichute supérieur 112 se trouve en-dessous de la bande supérieure 122 du volet antichute inférieur 113. Cette dernière bande 122 est « cachée » derrière le volet antichute supérieur 112 et, de ce fait, représentée par des lignes en pointillés. Un chevauchement de volets antichute, tel que celui illustré à la figure 2, contribue à bien protéger des marchandises chargées dans un chariot, ou plus généralement, dans un module logistique.

Il convient que les volets antichute qui se chevauchent soient bien tendus, et présentent une bonne tenue. Pour ce faire, par exemple, le ruban auto-agrippant supérieur 114 est retourné sur lui-même au-dessus d'une traverse horizontale se situant au-dessus de la bande supérieure 116 du volet antichute supérieur 112. Le ruban auto-agrippant inférieur 115 est retourné sur lui-même en dessous d'une traverse horizontale se situant en dessous de la bande inférieure 117. Les mêmes remarques s'appliquent au ruban auto-agrippant supérieur 120 du volet antichute inférieur 113, et au ruban auto-agrippant inférieur 121 de ce même volet 113.

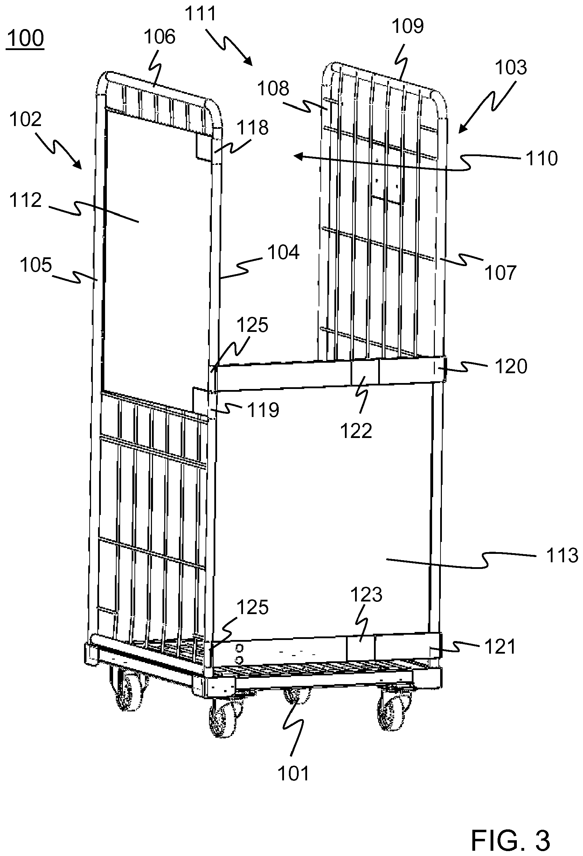

La figure 3 illustre schématiquement, par une vue en perspective, le chariot 100 déjà illustré à la figure 1, mais dans un état différent, à savoir dans un état partiellement fermé. Dans cet état, le volet antichute inférieur 113 est dans l'état de fermeture tel que décrit dans ce qui précède, de sorte que ce volet 113 recouvre la partie inférieure de la façade 110 du chariot 100. Le volet antichute supérieur 112 est dans un état rabattu. Dans cet état, ce volet 112 est accolé à la ridelle gauche 102 à laquelle le volet antichute supérieur 112 est fixé de façon verrouillée, comme c'est le cas pour le volet antichute inférieur 113. Le volet antichute supérieur 112 peut être maintenu dans l'état rabattu en retournant sur eux-mêmes les rubans auto-agrippant 114, 115 illustrés aux figures 1 et 2, et cela autour d'un montant de la ridelle gauche 102. Ce montant peut être le montant de bord arrière 105.

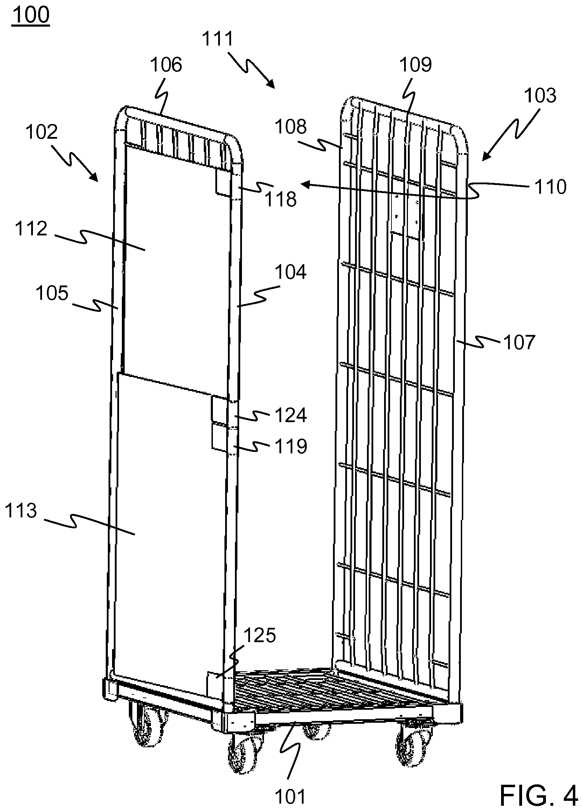

La figure 4 illustre schématiquement, par une vue en perspective, le chariot 100 déjà illustré à la figure 1, mais dans un état encore différent, à savoir dans un état ouvert. Dans cet état, le volet antichute inférieur 113 et le volet antichute supérieur 112 sont dans l'état rabattu tel que décrit dans le paragraphe précédent. C'est-à-dire, le volet antichute inférieur 113 est aussi accolé à la ridelle gauche 102 et maintenu dans cet état par les rubans auto-agrippant 120, 121 illustrés aux figures 1 à 3, en retournant ces rubans 120, 121 sur eux-mêmes autour d'un montant de la ridelle gauche 102.

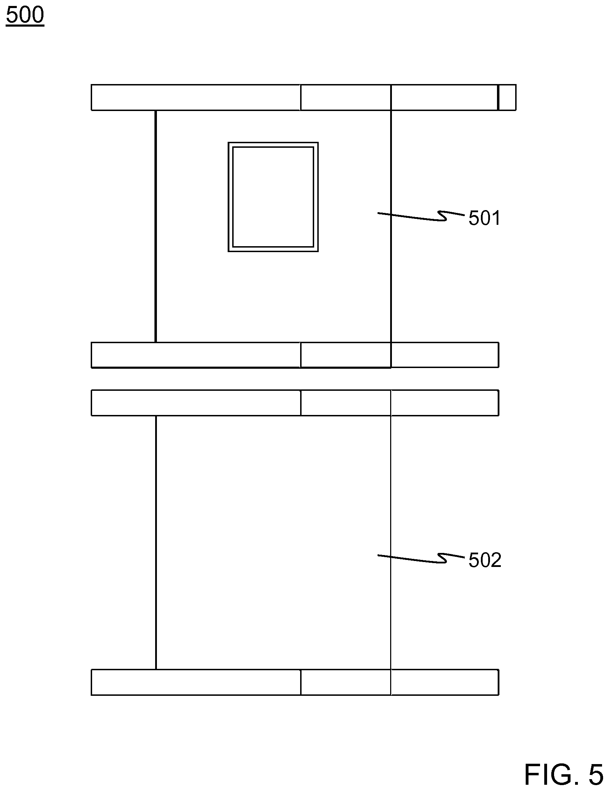

La figure 5 illustre schématiquement, par une vue de dessus, un jeu de volets antichute 500 apte à être montés en juxtaposition sur un module logistique, tel que le chariot 100 décrit dans ce qui précède en référence aux figures 1 à 4. Au fait, dans cet exemple, un premier volet antichute 501 correspond au volet antichute supérieur 112 décrit dans ce qui précède en référence aux figures. Un second volet antichute 502 correspond au volet antichute inférieur 113 décrit en référence à ces figures 1 à 4. Ces deux volets antichute 501, 502 sont dimensionnés pour que chacun ne couvre qu'une partie d'une face du module logistique dépourvue de ridelle.

Le chariot 100 illustré décrit dans ce qui précède en référence aux figures 1 à 4 peut avantageusement être utilisé dans un procédé de préparation de commande, tel que décrit dans ce qui suit. En début du procédé, un opérateur met le chariot 100 dans l'état partiellement fermé illustré à la figure 3, si le chariot 100 n'était pas encore dans cet état. L'operateur peut utiliser un transpalette avec des fourches pour facilement déplacer le chariot 100 lors de la préparation de commande. L'opérateur monte alors le chariot 100 sur les fourches du transpalette, qui peuvent accueillir un ou plusieurs autres chariots. L'opérateur conduit le transpalette avec le chariot 100 monté là-dessus pour circuler dans des allées où différentes marchandises sont stockées. L'opérateur s'arrête régulièrement afin de remplir le chariot 100 avec des marchandises spécifiées dans la commande.

En début du procédé, le volet antichute inférieur 113 est fermé, tandis que le volet antichute supérieur 112 est ouvert, telle qu'illustrée à la figure 3. Le volet antichute inférieur 113 protège à lui seul les marchandises qui sont chargées en début de préparation de commande. La partie supérieure de la façade 110 du chariot 100 reste ouverte et donc accessible à l'opérateur qui effectue la préparation de commande. Ainsi, l'opérateur n'a pas besoin d'ouvrir le volet antichute inférieur 113 pour placer une marchandise dans le chariot 100. Le volet antichute inférieur 113 peut rester fermé durant toute la préparation de commande.

Le volet antichute supérieur 112 peut rester ouvert jusqu'à un point où les marchandises chargées dépassent le volet antichute inférieur 113. C'est seulement à partir de ce point où l'opérateur devrait fermer le volet antichute supérieur 112 avant de déplacer le chariot 100, et ouvrir ce volet 112 afin de pouvoir charger une marchandise. Ainsi, il y a relativement peu d'opérations d'ouverture et de fermeture de volet antichute à effectuer lors de la préparation de commande, seulement à la fin. Cela contribue à une bonne efficacité logistique. Cet avantage est important car, par exemple, dans un centre logistique d'une chaîne de magasins il y a typiquement entre 1500 et 2500 de préparations de commande à effectuer.

### REMARQUES FINALES

La description détaillée qui vient d'être faite en référence aux dessins n'est qu'une illustration de quelques modes de réalisation de l'invention. L'invention peut être réalisée de nombreuses façons différentes. Afin d'illustrer ceci, quelques alternatives sont indiquées sommairement.

L'invention peut être appliquée avantageusement dans de nombreux domaines logistiques. Par exemple, l'invention peut, en principe, être appliquée dans tous domaines logistiques où des marchandises stockées à différents endroits sont successivement chargées dans un module logistique. De façon globale, le terme « module logistique » doit être interprété de façon large. Ce terme embrasse toute entité sur laquelle des objets peuvent être posés pour des besoins de stockage ou de transport. Par exemple, un module logistique peut être sous forme d'un conteneur dépourvu de roulettes mais qui, par exemple, peut être gerbé sur un autre conteneur.

Il existe différentes façons de réaliser un module logistique conforme à l'invention. Se référant au mode de réalisation illustré aux figures 1 à 4, le fond 111 du chariot 100 peut être recouvert par un seul volet antichute, fixe ou amovible, ou à par un seul panneau. Il est également possible de munir le fond 111 du chariot 100 d'une juxtaposition de volets antichute similaire à celle servant à recouvrir la façade 110. Par ailleurs, un module logistique peut être muni d'une étagère horizontale. Ainsi, il est possible de séparer deux ensembles de marchandises : un ensemble placé sur un plancher du module logistique, l'autre ensemble placé sur l'étagère horizontale. Ces deux ensembles peuvent concerner deux commandes de deux magasins différents. Dans une telle réalisation, la juxtaposition de volets antichute facilite l'extraction de l'une et l'autre commande lors des livraisons, tout en sécurisant les marchandises lors des transports.

Une juxtaposition de volets antichute peut comprendre plus de deux volets antichute individuels. Par exemple, il est possible d'apporter les modifications suivantes au mode de réalisation illustré aux figures 1 à 4. Le volet antichute supérieur 112 et le volet antichute inférieur 113 sont réduits en hauteur, et un volet antichute intermédiaire est disposé entre ces volets 112, 113. Par ailleurs, le terme « volet antichute » doit être interprété de façon large. Ce terme embrasse toute forme de feuille souple pouvant obturer, au moins partiellement, une face dépourvue de ridelle.

Un module conforme à l'invention peut comprendre plus de deux ridelles. Par exemple, se référant au mode de réalisation illustré aux figures 1 à 4, le chariot 100 peut être modifié pour que le fond 111 soit également muni d'une ridelle. Dans ce cas, il n'y aurait qu'une face dépourvue de ridelle : la façade 110. Par ailleurs, une ridelle peut être réalisée sous différentes formes. Par exemple, une ridelle peut comprendre un panneau plein ou perforé. Le terme « ridelle » doit donc être interprété de façon large, embrassant toute structure pouvant maintenir un chargement.

Il existe de nombreux moyens de fixation dans le volet antichute, de façon amovible ou verrouillée. Par exemple, un crochet peut constituer un tel moyen de fixation. Le crochet peut être muni d'une forme de serrure pour que la fixation soit verrouillée.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Module logistique (100) pour stocker, au moins temporairement, des marchandises, le module logistique comprenant :
- une embase (101),
- au moins deux ridelles (102, 103) montées verticalement sur l'embase, au moins une face (110) du module logistique étant dépourvue de ridelle, et
- une juxtaposition d'au moins deux volets antichute individuels (112, 113) comprenant un volet antichute inférieur (113) sous la forme d'une feuille souple, le volet antichute inférieur étant apte à être mis dans un état de fermeture dans lequel volet antichute inférieur recouvre individuellement une partie inférieure d'une face (110) du module logistique dépourvue de ridelle et apte à être mis dans un état rabattu, et un volet antichute supérieur (112) sous la forme d'une feuille souple, le volet antichute supérieur étant apte à être mis dans un état de fermeture dans lequel le volet antichute supérieur recouvre individuellement une partie supérieure de la même face du module logistique et apte à être mis dans un état rabattu, **caractérisé en ce que** la juxtaposition est disposée de sorte que le volet antichute inférieur et le volet antichute supérieur se chevauchent partiellement.

2. Module logistique selon la revendication 1, dans lequel un volet antichute (112, 113) de la juxtaposition comprend des moyens de fixation amovible (114, 115, 120, 121) afin de fixer de façon amovible un bord du volet antichute à une de deux ridelles (103) voisines de la face (110) du module logistique dépourvue de ridelle.

3. Module logistique selon la revendication 2, dans lequel les moyens de fixation amovible (114, 115, 120, 121) comprennent un ruban auto-agrippant.

4. Module logistique selon l'une quelconque des revendications 2 et 3, dans lequel le volet antichute (112, 113) comprend des moyens de fixation verrouillée (118, 119, 124, 125) afin de fixer de façon verrouillée un autre bord du volet antichute à l'autre des deux ridelles (102, 103) voisines de la face (110) du module logistique dépourvue de ridelle.

5. Module logistique selon la revendication 4, dans lequel les moyens de fixation verrouillée (118, 119, 124, 125) comprennent un ruban retourné sur lui-même en boucle, et cela de façon fixe, autour d'un montant de l'autre des deux ridelles (102) voisines.

6. Module logistique selon l'une quelconque des revendications 1 à 5, le module logistique étant sous forme d'un chariot de manutention.

7. Procédé de préparation de commande impliquant un module logistique (100) selon l'une quelconque des revendications 1 à 6, le procédé comprenant :
- une étape de début dans lequel le volet antichute inférieur (113) est maintenu dans l'état de fermeture, tandis que le volet antichute supérieur (112) est maintenu dans un état d'ouverture, un opérateur plaçant des marchandises dans le module logistique par la partie supérieure laissée ouverte,
- une étape de fin dans lequel le volet antichute inférieur (113) est maintenu dans un état de fermeture, l'opérateur fermant le volet antichute supérieur (112) avant de déplacer le module logistique, et ouvrant le volet antichute supérieur (112) pour placer des marchandises dans le module logistique.

## Patentansprüche

1. Logistikmodul (100), um Waren mindestens vorübergehend zu lagern, wobei das Logistikmodul umfasst:
- eine Basis (101),
- mindestens zwei Seitenwände (102, 103), die vertikal an der Basis angebracht sind, wobei mindestens eine Seite (110) des Logistikmoduls keine Seitenwand aufweist, und
- eine Aneinanderreihung von mindestens zwei einzelnen Fallschutzklappen (112, 113), die eine untere Fallschutzklappe (113) in Form einer biegsamen Platte, wobei die untere Fallschutzklappe in einen Schließzustand gebracht werden kann, in dem die untere Fallschutzklappe einzeln einen unteren Teil einer Seite (110) ohne Seitenwand des Logistikmoduls bedeckt und in einen weggeklappten Zustand gebracht werden kann, und eine obere Fallschutzklappe (112) in Form einer biegsamen Platte umfasst, wobei die obere Fallschutzklappe in einen Schließzustand gebracht werden kann, in dem die obere Fallschutzklappe einzeln einen oberen Teil derselben Seite des Logistikmoduls bedeckt und in einen weggeklappten Zustand gebracht werden kann, **dadurch gekennzeichnet, dass** die Aneinanderreihung so angeordnet ist, dass die untere Fallschutzklappe und die obere Fallschutzklappe sich teilweise überlappen.

2. Logistikmodul nach Anspruch 1, wobei eine Fallschutzklappe (112, 113) der Aneinanderreihung lösbare Befestigungsmittel (114, 115, 120, 121) umfasst, um einen Rand der Fallschutzklappe lösbar an einer der zwei Seitenwände (103), die an die Seite (110) des Logistikmoduls ohne Seitenwand angrenzen, zu befestigen.

3. Logistikmodul nach Anspruch 2, wobei die lösbaren Befestigungsmittel (114, 115, 120, 121) ein Klettband umfassen.

4. Logistikmodul nach einem der Ansprüche 2 und 3, wobei die Fallschutzklappe (112, 113) verriegelte Befestigungsmittel (118, 119, 124, 125) umfasst, um einen anderen Rand der Fallschutzklappe verriegelt an der anderen der zwei Seitenwände (102, 103), die an die Seite (110) ohne Seitenwand des Logistikmoduls angrenzen, zu befestigen.

5. Logistikmodul nach Anspruch 4, wobei die verriegelten Befestigungsmittel (118, 119, 124, 125) ein fest um eine Strebe der anderen der zwei angrenzenden Seitenwände (102) zur Schleife geschlagenes Band umfassen.

6. Logistikmodul nach einem der Ansprüche 1 bis 5, wobei das Logistikmodul die Form eines Transportwagens aufweist.

7. Verfahren zur Kommissionierung einer Bestellung mithilfe eines Logistikmoduls (100) nach einem der Ansprüche 1 bis 6, wobei das Verfahren umfasst:
- einen anfänglichen Schritt, bei dem die untere Fallschutzklappe (113) im Schließzustand gehalten wird, während die obere Fallschutzklappe (112) in einem Öffnungszustand gehalten wird, wobei ein Bediener Waren über den offengelassenen oberen Teil in das Logistikmodul legt,
- einen abschließenden Schritt, bei dem die untere Fallschutzklappe (113) in einem Schließzustand gehalten wird, wobei der Bediener die obere Fallschutzklappe (112) schließt, bevor er das Logistikmodul bewegt, und die obere Fallschutzklappe (112) öffnet, um Waren in das Logistikmodul zu legen.

## Claims

1. A logistic module (100) for storing, at least temporarily, goods, the logistic module comprising:
- a base (101),
- at least two side walls (102, 103) mounted vertically on the base, at least one face (110) of the logistic module being without side walls, and
- a juxtaposition of at least two individual fall prevention flaps (112, 113) comprising a lower fall prevention flap (113) in the shape of a flexible sheet, the lower fall prevention flap being able to be placed in a closed state wherein the lower fall prevention flap individually covers a lower part of a face (110) of the logistic module without side walls and capable of being placed in a folded state, and an upper fall prevention flap (112) in the shape of a flexible sheet, the upper fall prevention flap being capable of being placed in a closed state wherein the upper fall prevention flap individually covers an upper part of the same face of the logistic module and capable of being placed in a folded state, **characterised in that** the juxtaposition is disposed so that the lower fall prevention flap and the upper fall prevention flap partially overlap.

2. The logistic module according to claim 1, wherein a fall prevention flap (112, 113) of the juxtaposition comprises removable fastening means (114, 115, 120, 121) in order to removably fasten an edge of the fall prevention flap to one of the two side walls (103) neighbouring the face (110) of the logistic module without side walls.

3. The logistic module according to claim 2, wherein the removable fastening means (114, 115, 120, 121) comprise a hook-and-loop tape.

4. The logistic module according to any one of claims 2 and 3, wherein the fall prevention flap (112, 113) comprises locked fastening means (118, 119, 124, 125) in order to fasten in a locked manner another edge of the fall prevention flap to the other of the two side walls (102, 103) neighbouring the face (110) of the logistic module without side walls.

5. The logistic module according to claim 4, wherein the locked fastening means (118, 119, 124, 125) comprise a tape turned over on itself in a loop, in a fixed manner, around an upright of the other of the two neighbouring side walls (102).

6. The logistic module according to any one of claims 1 to 5, the logistic module being in the form of a handling trolley.

7. An order preparation method involving a logistic module (100) according to any one of claims 1 to 6, the method comprising:
- a starting step wherein the lower fall prevention flap (113) is maintained in the closed state, while the upper fall prevention flap (112) is maintained in an open state, an operator placing goods in the logistic module by the upper part left open,
- an end step wherein the lower fall prevention flap (113) is maintained in a closed state, the operator closing the upper fall prevention flap (112) before moving the logistic module, and opening the upper fall prevention flap (112) to place goods in the logistic module.
